# FASCICULE DE BREVET EUROPEEN

(11) **EP 3 189 233 B1**
(45) Date de publication et mention de la délivrance du brevet: **17.02.2021**
(21) Numéro de dépôt: 15771675.4
(22) Date de dépôt: 03.09.2015
(51) Int. Cl.: F03D 13/20, F03D 13/10

(54) **STRUCTURE DE TOUR POUR ROTOR D'ÉOLIENNE À AXE VERTICAL**
TURMSTRUKTUR FÜR WINDTURBINENROTOR MIT VERTIKALER ACHSE
TOWER STRUCTURE FOR VERTICAL-AXIS WIND TURBINE ROTOR

(30) Priorité: 05.09.2014 FR 1458360
(43) Date de publication de la demande: 12.07.2017
(73) Titulaire: Wind-it, 78280 Guyancourt (FR)
(72) Inventeur: MENARD, Raphaël, F-75003 Paris (FR)
(74) Mandataire: Plasseraud IP
(86) Numéro de dépôt international: PCT/FR2015/052328
(87) Numéro de publication internationale: WO 2016/034818

(56) Documents cités:
- WO-A1-2012/023202
- CN-Y- 201 180 617
- DE-A1- 10 353 118
- DE-U1-202012 002 729
- FR-A1- 2 945 325
- US-A1- 2011 302 879

## Description

La présente invention concerne une structure de tour pour supporter un ou plusieurs rotors d'éolienne à axe vertical.

Des structures de tours ont déjà été proposées, qui comportent plusieurs niveaux d'étages superposés pour supporter des rotors d'éolienne à axe vertical, avec un rotor qui est situé à chaque niveau d'étage. Par exemple, le document FR 2 945 325 décrit une structure de tour creuse et ajourée, qui est conçue pour contenir les rotors à axe vertical quelle que soit leur position en rotation. Mais une structure de tour telle que décrite dans ce document peut perturber l'écoulement du vent autour des pales des rotors, causant une réduction de l'efficacité aéraulique de chaque rotor. En outre, la structure creuse qui est décrite n'optimise pas nécessairement au maximum la performance de production éolienne, tant du point de vue de la configuration géométrique de la tour que de la constitution de ses éléments structurels. Le document US2011/0302879 décrit une structure de tours comportent plusieurs niveaux superposés pour supporter des rotors d'éolienne à axe horizontal.

A partir de cette situation, la présente invention a pour buts d'améliorer certains au moins des critères suivants, par rapport aux structures de tours existantes :
- la structure de tour perturbe le moins possible le fonctionnement de l'éolienne. Notamment, la structure agit très faiblement sur l'écoulement du vent autour des pales des rotors d'éolienne, pour améliorer l'efficacité aéraulique de chaque rotor qui est porté par la structure de tour ;
- la structure de tour possède une rigidité élevée, et une résistance importante par rapport aux efforts mécaniques qui peuvent être générés par la rotation des rotors d'éolienne, y compris lorsque la vitesse de rotation varie ;
- la structure de tour rend possible une surface qui est balayée par chaque rotor d'éolienne pendant sa rotation, agrandie par rapport aux structures existantes, afin d'augmenter la puissance mécanique qui est récupérée par le rotor ;
- la structure de tour n'est pas sujette à des vibrations importantes, de telles vibrations pouvant être générées par l'écoulement du vent à travers la structure ou par la rotation des rotors. Ce but est recherché notamment à travers une rigidité importante de la structure de tour, et à travers la légèreté de ses composants structurels ;
- la structure de tour provoque par elle-même, séparément des rotors d'éolienne qu'elle supporte, une prise au vent qui est réduite ;
- la structure de tour peut être installée facilement sur son site d'exploitation, en étant stable sur le sol ou sur des flotteurs dans le cas d'une installation offshore ;
- la masse totale de la structure de tour est réduite, pour limiter le coût de matières premières et faciliter le transport des éléments constitutifs de la structure. Notamment, une géométrie modulaire est recherchée pour la structure de tour, dont chacun des composants structurels peut être transporté aisément ; et
- l'assemblage de la structure de tour peut être effectué facilement et rapidement sur le site d'exploitation.

Pour atteindre l'un au moins de ces buts ou d'autres, un premier aspect de l'invention propose une nouvelle structure de tour à plusieurs niveaux d'étages superposés pour supporter au moins un rotor d'éolienne à axe vertical, la structure ayant un axe de symétrie vertical et restant identique à elle-même par des rotations de ±120° (degré) autour cet axe de symétrie. Elle comprend un assemblage de segments linéaires et rigides qui inclut au moins :
- trois montants qui s'étendent chacun entre une base et un sommet de la structure ;
- au moins deux ensembles de segments d'étage ; et
- des segments de soutien.

Dans une structure de tour conforme à l'invention, les segments d'étage d'un même ensemble sont assemblés à un niveau d'étage de la structure, pour former un polygone horizontal à ce niveau d'étage. Chaque segment d'étage forme un côté du polygone et des connexions entre des extrémités respectives de deux segments d'étage successifs dans le polygone forment un sommet du polygone. Trois des sommets de chaque polygone, dits sommets d'arêtes, sont connectés respectivement aux trois montants, et deux quelconques des sommets d'arêtes de chaque polygone sont séparés par au moins un autre sommet de ce polygone, dit sommet intermédiaire de la paire des deux sommets d'arêtes. De plus, pour chaque paire de sommets d'arêtes de l'un quelconque des polygones, au moins un sommet intermédiaire est en outre relié obliquement à au moins l'un des montants auquel est connecté l'un des sommets d'arêtes de la paire, par deux segments de soutien respectivement vers le haut et vers le bas de la tour. Pour chaque polygone, chaque sommet intermédiaire est situé à l'extérieur d'un triangle qui est formé par les sommets d'arêtes de ce polygone.

La structure est en outre adaptée pour recevoir un rotor d'éolienne ou plusieurs rotors d'éolienne superposés, chaque rotor étant contenu entre deux niveaux d'étages successifs, et l'axe de chaque rotor étant confondu avec l'axe de symétrie de la structure.

Une telle structure de tour est constituée d'un nombre restreint de segments, dont les diamètres extérieurs peuvent être optimisés structurellement, si bien que sa prise au vent est particulièrement faible. Pour la même raison, la structure perturbe dans une mesure réduite l'écoulement du vent autour des pales des rotors d'éolienne. Sous certaines orientations de vent, des essais ont montré que la structure pouvait aussi avoir un effet favorable sur la performance de la production énergétique. Autrement dit, le fonctionnement aéraulique de chaque pale est très peu perturbé par la structure de tour. De cette façon, la puissance mécanique qui est récupérée par chaque rotor à partir du vent est augmentée.

En outre, une telle structure de tour est principalement constituée de motifs triangulaires, si bien qu'elle est peu ou pas sujette à des déformations géométriques. En effet, chaque segment est sollicité principalement en traction ou en compression, presque sans contraintes de cisaillement, tandis que les instabilités de flambage sont réduites. La structure possède aussi une rigidité élevée et une résistance importante par rapport aux efforts mécaniques qui peuvent être générés par la rotation et/ou l'accélération des rotors. Ces motifs triangulaires limitent aussi la propagation de vibrations dans la structure de tour. Autrement dit, la structure de tour procure un compromis optimisé entre une rigidité qui est élevée et un poids total qui est réduit.

Pour ces bonnes propriétés mécaniques, la structure de tour peut être utilisée en outre pour supporter des équipements supplémentaires, tels que des antennes de téléphonie mobile.

Grâce aux polygones qui sont situés à chaque niveau d'étage, avec les sommets intermédiaires qui sont à l'extérieur des triangles des sommets d'arêtes, chaque rotor d'éolienne peut avoir une surface balayée qui dépasse le triangle des sommets d'arêtes. Les surfaces balayées par les rotors peuvent ainsi être plus grandes, tout en restant contenues dans la structure. Dans le cadre de la présente invention, on entend par surface balayée par un rotor la surface latérale du cône ou du cylindre qui est décrit par chaque pale du rotor.

Par ailleurs, le faible nombre des segments qui constituent la structure de tour contribue aussi à réduire ses coûts de fabrication et d'installation sur site.

Enfin, la symétrie d'ordre trois autour d'un axe central vertical, avec trois pieds, procure une grande stabilité à la structure de tour lorsqu'elle est installée sur le sol ou sur des flotteurs dans le cas d'une exploitation offshore.

Dans des modes de réalisation préférés de l'invention, les perfectionnements suivants peuvent être utilisés, séparément ou en combinaison de plusieurs d'entre eux :
- chaque montant peut être parallèle à un plan méridien respectif, qui contient l'axe de symétrie de la structure ;
- chaque ensemble de segments d'étage peut comporter six segments d'étage de longueurs identiques, de sorte que chaque polygone est un hexagone régulier. Alors, pour chaque hexagone et pour chaque paire de sommets d'arêtes de cet hexagone, l'unique sommet intermédiaire de la paire est relié obliquement aux deux montants des sommets d'arêtes de la paire, par quatre segments de soutien, un vers le haut et un vers le bas de la tour pour chacun des deux montants. De plus, pour chaque hexagone, les six segments de soutien qui relient vers le bas les trois sommets intermédiaires aux montants ont une première longueur commune, et les six segments de soutien qui relient vers le haut les mêmes trois sommets intermédiaires aux montants ont une seconde longueur commune ;
- entre deux niveaux d'étages successifs dans la structure, tous les segments de soutien qui relient des sommets intermédiaires du plus haut ou du plus bas de ces deux niveaux d'étages successifs, peuvent être connectés aux montants à une même hauteur de la structure ;
- la structure de tour peut comprendre en outre pour chaque niveau d'étage, des segments radiaux qui s'étendent respectivement à partir de certains au moins des sommets du polygone de ce niveau d'étage, en direction de l'axe de symétrie de la structure, pour former un support de rotor d'éolienne. Possiblement, de tels segments radiaux peuvent n'être associés qu'aux sommets intermédiaires ;
- pour au moins un des niveaux d'étages et pour certains au moins des sommets du polygone de ce niveau d'étage, deux segments radiaux peuvent s'étendre à partir de chacun des sommets du polygone respectivement en direction de deux points de convergence qui sont situés sur l'axe de symétrie de la structure, les deux points de convergence étant espacés le long de l'axe de symétrie et communs aux sommets du polygone du niveau d'étage, à partir desquels s'étendent les segments radiaux ;
- chaque montant peut être rectiligne et se rapprocher de l'axe de symétrie de la structure en direction du haut de la tour, au moins entre le niveau d'étage le plus bas et le niveau d'étage le plus haut. Entre ces deux niveaux d'étages, les montants forment alors les arêtes d'un cône à base triangulaire équilatérale ;
- certains au moins des montants, segments d'étages et segments de soutien peuvent avoir chacun une limite extérieure de section qui est arrondie, sur une partie au moins d'une longueur de ce montant, segment d'étage ou segment de soutien. Un compromis qui est encore meilleur peut ainsi être obtenu entre la résistance du montant ou segment à des contraintes mécaniques, et une perturbation de l'écoulement du vent qui est minimale ; et
- grâce à sa composition modulaire, la structure de tour peut comprendre n+1 niveaux d'étages pour recevoir n rotors d'éolienne, n étant un nombre entier non nul inférieur à vingt, préférablement égal à trois, quatre, cinq ou six.

Un second aspect de l'invention propose une tour qui comprend :
- une structure de tour conforme au premier aspect de l'invention ; et
- au moins un rotor d'éolienne à axe vertical, chaque rotor étant contenu entre deux niveaux d'étages successifs de la structure, et l'axe de chaque rotor étant confondu avec l'axe de symétrie de la structure.

Avantageusement, pour augmenter la surface qui est balayée par l'un au moins des rotors d'éolienne, une trace d'extrémité radiale supérieure du rotor, qui est décrite lors d'une rotation de ce rotor, peut dépasser radialement dans une projection sur un plan horizontal, le triangle des sommets d'arêtes du polygone du niveau d'étage qui est situé juste au dessus du rotor. La même caractéristique peut aussi être appliquée pour l'extrémité radiale inférieure d'un rotor par rapport au niveau d'étage qui est situé juste en dessous de ce rotor.

Pour éviter des balourds importants et réduire des vibrations qui sont susceptibles d'être générées par la rotation de chaque rotor d'éolienne, chacun des rotors peut comporter trois pales d'éolienne.

Enfin, la tour peut comprendre en outre des antennes, notamment des antennes de téléphonie mobile, qui sont fixées sur la structure au dessus du niveau d'étage qui suit le rotor d'éolienne le plus haut en direction du sommet de la tour.

D'autres particularités et avantages de la présente invention apparaîtront dans la description ci-après d'exemples de réalisation non limitatifs, en référence aux dessins annexés, dans lesquels :
- la figure 1a est une vue en perspective d'une structure de tour conforme à l'invention, et la figure 1b est une vue de la tour équipée de rotors d'éolienne ;
- les figures 2a et 2b sont deux vues en élévation de la structure de tour de la figure 1a, et la figure 2c est une vue en plan correspondante ;
- la figure 3a est une vue en perspective d'un segment de la structure de tour des figures 1 a et 2a-2c ;
- la figure 3b correspond à la figure 3a, avec un rotor d'éolienne en position de fonctionnement ;
- la figure 3c est une vue en perspective d'un niveau d'étage selon un mode particulier de réalisation de l'invention ;
- la figure 4 est une vue en plan qui correspond à la figure 3b, et qui montre deux traces décrites par des extrémités du rotor d'éolienne ; et
- la figure 5 est un tableau de caractéristiques calculées pour plusieurs formes de niveaux d'étages.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

Les références ont les significations suivantes :
Δ axe de symétrie de la structure de tour
1, 2, 3 montants de la structure de tour, aussi appelés membrures
NE niveaux d'étages
10 segments d'étages
11 sommets d'arêtes
12 sommets intermédiaires
20 segments de soutien, aussi appelés diagonales de contreventement
21 connexions des segments de soutien aux montants
30 segments radiaux
31 bloc de palier d'un rotor d'éolienne
32 rotor d'éolienne
33 pale de rotor d'éolienne
34 bras de rotor d'éolienne
35 arbre de rotor d'éolienne
SS segments supplémentaires de la structure de tour
40 antennes de téléphonie mobile

L'axe Δ est vertical au dessus du sol, et l'ensemble de la structure de tour possède une symétrie d'ordre trois autour de l'axe Δ. Les montants 1 à 3 sont identiques, et s'étendent chacun à partir de la base de la structure jusqu'à son sommet. L'extrémité inférieure de chaque montant constitue donc un des trois pieds de la structure de tour. La partie de la structure de tour qui est située en dessous du niveau d'étage le plus bas est couramment appelée base ou piètement, celle qui est comprise entre le niveau d'étage le plus bas et celui le plus haut est couramment appelée hauteur courante, et une partie de structure qui peut optionnellement être ajoutée au dessus du niveau d'étage le plus haut est appelée couronnement.

Dans le mode de réalisation qui est décrit en premier, chaque montant est parallèle à un plan méridien qui contient l'axe Δ, et l'écartement entre les montants diminue en direction du sommet de la structure, jusqu'au niveau d'étage le plus haut.

Dans tout plan de section horizontal qui est situé entre la base et le sommet de la structure, les montants 1 à 3 déterminent les sommets d'un triangle équilatéral.

Chaque niveau d'étage NE est horizontal, et comporte six segments d'étage 10 qui sont connectés entre eux pour former un hexagone. De préférence, les six segments d'étage 10 dans chaque niveau d'étage NE séparément, ont une même longueur commune, de sorte que l'hexagone est régulier. Cette longueur des segments d'étages 10 peut varier d'un niveau d'étage NE à un autre. Chaque hexagone comporte une alternance de sommets d'arêtes 11 et de sommets intermédiaires 12. Les sommets d'arêtes 11 sont connectés aux montants 1 à 3, dans le niveau d'étage NE correspondant. Par contre, les sommets intermédiaires 12 sont reliés aux montants 1 à 3 en dehors du niveau d'étage NE, par des segments de soutien 20. Chaque sommet intermédiaire 12 est ainsi relié aux deux mêmes montants que les sommets d'arêtes 11 qui lui sont voisins dans l'hexagone. Ainsi, chaque sommet intermédiaire 12 est connecté vers le haut à deux des montants 1 à 3, et vers le bas aux mêmes deux montants. Les connexions 21 des segments de soutien 20 aux montants 1-3 sont de préférence situées toutes à une même hauteur entre deux niveaux d'étages NE successifs, à la fois pour les montants de soutien 20 qui proviennent du plus bas de ces deux niveaux d'étages, et pour ceux qui proviennent du plus haut des mêmes deux niveaux d'étages. Alternativement, les montants de soutien 20 qui proviennent du plus bas des deux niveaux d'étages NE successifs, peuvent être connectés aux montants 1 à 3 plus bas ou plus haut que les montants de soutien 20 qui proviennent du plus haut de ces deux niveaux d'étages NE.

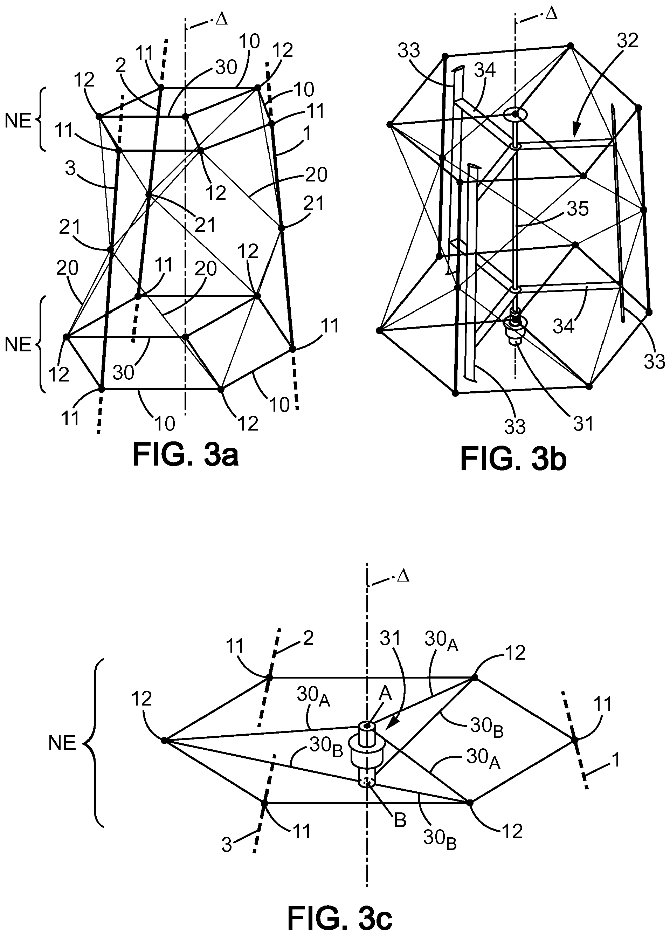

Chaque niveau d'étage NE peut comprendre en outre des segments radiaux 30 (figure 3a) pour supporter au moins un bloc de palier 31 des rotors d'éolienne qui sont situés juste au dessus ou juste en dessous de ce niveau d'étage NE. Par exemple, les segments radiaux 30 s'étendent à partir des sommets intermédiaires 12 en direction de l'axe Δ, sensiblement horizontalement ou avec une faible inclinaison, jusqu'au bloc de palier 31.

Chaque rotor 32 (figure 3b) peut comprendre un arbre central 35, qui est superposé à l'axe Δ, plusieurs pales 33 qui sont déportées radialement, de préférence trois pales 33, et des bras 34 sensiblement horizontaux pour connecter les pales 33 à l'arbre 35. Les pales 33 peuvent être inclinées par rapport à la direction verticale, par exemple pour être sensiblement parallèles aux montants 1 à 3. De telles pales 33 peuvent avoir une petite section, être légères et peu onéreuses. Eventuellement, deux rotors 32 d'éolienne qui sont successifs dans la structure de tour, l'un juste au dessus de l'autre avec un seul niveau d'étage NE entre eux, peuvent être jumelés en étant solidaires. Dans ce cas, un bloc de palier 31 peut être commun aux deux rotors 32 qui sont jumelés. Ce bloc de palier 31 peut alors être situé au niveau d'étage NE qui est situé entre les deux rotors 32 jumelés.

Dans la variante de la figure 3c, deux segments radiaux 30_{A} et 30_{B} sont issus de chacun des trois sommets intermédiaires 12 d'un même niveau d'étage NE, et s'étendent en direction des points A et B, dits points de convergence et situés sur l'axe de symétrie Δ de la structure de tour. Trois segments radiaux 30_{A} convergent ainsi vers le point A, et trois segments radiaux 30_{B} convergent vers le point B. Les points A et B sont distants le long de l'axe Δ de sorte qu'un bloc de palier 31 puisse être placé sur l'axe de symétrie Δ, entre les extrémités centrales des segments radiaux 30_{A} du niveau d'étage NE d'une part, et celles des segments radiaux 30_{B} du même niveau d'étage NE d'autre part. Selon la constitution qui est adoptée pour chaque éolienne, le bloc de palier 31 qui est placé de cette manière peut être associé à un stator et à un frein aussi situés entre les points A et B.

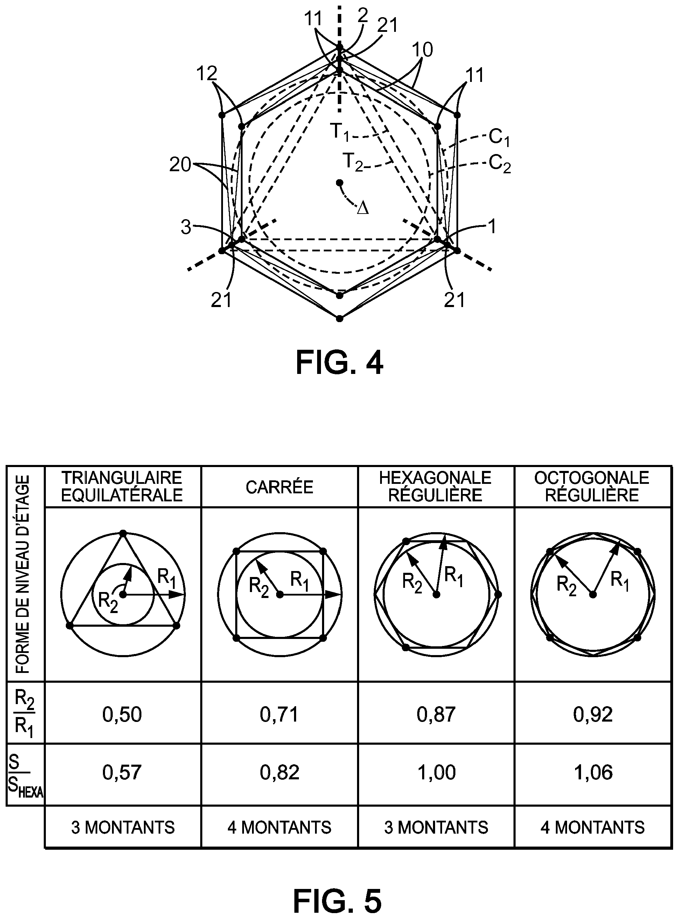

Les références C₁ et C₂ sur la figure 4 désignent les deux cercles qui sont décrits respectivement par les extrémités inférieure et supérieure des pales 33, pour le rotor d'éolienne 32 qui est situé entre les deux niveaux d'étages NE représentés, lors d'une rotation de ce rotor autour de l'axe Δ. T₁ et T₂ désignent les deux triangles équilatéraux qui sont formés par les sommets d'arêtes 11 de chacun des deux niveaux d'étage NE, T₁ pour le niveau inférieur et T₂ pour le niveau supérieur. Comme cela apparaît sur la figure 4, le cercle C₁ dépasse du triangle T₁ tout en restant à l'intérieur de l'hexagone des segments d'étage 10 du niveau d'étage inférieur. De même, le cercle C₂ dépasse du triangle T₂ tout en restant à l'intérieur de l'hexagone des segments d'étage 10 du niveau d'étage supérieur. Ainsi, grâce à la forme polygonale des niveau d'étage avec les sommets intermédiaires qui sont à l'extérieur des triangles formés par les sommets d'arêtes, les rotors d'éolienne peuvent avoir des diamètres qui sont plus grands, tout en restant contenus à l'intérieur de la structure de tour. La puissance mécanique qui est récupérée par les rotors de la tour est ainsi supérieure, sans que l'écartement entre les montants soit augmenté.

Le tableau de la figure 5 regroupe des valeurs calculées pour quatre formes de niveau d'étage NE, respectivement triangulaire équilatérale, carrée, hexagonale régulière et octogonale régulière. Pour chaque forme, le cercle externe est circonscrit au polygone du niveau d'étage, et son rayon est noté R₁. Le polygone du niveau d'étage est circonscrit à son tour à un cercle interne dont le rayon est noté R₂. R₂ est donc le rayon maximal d'une extrémité de rotor d'éolienne qui est située au niveau d'étage considéré, sans tenir compte d'un intervalle de sécurité en extrémité de pale qui assure que la pale ne cogne pas les segments de soutien. Le tableau indique les valeurs du quotient R₂/R₁ pour chaque forme de niveau d'étage, ainsi que la valeur du quotient de la surface S qui est balayée par la pale pour cette forme de niveau d'étage, par rapport à la surface balayée S_{HEXA} pour le cas de la forme hexagonale régulière. On suppose pour ce calcul que la longueur des pales est la même pour chaque forme de niveau d'étage. La surface balayée augmente avec le nombre de côtés du polygone de niveau d'étage. La forme hexagonale régulière correspond au mode de réalisation de l'invention décrit jusqu'à présent. Il constitue un compromis optimal entre la surface balayée par chaque pale qui est plus grande et un nombre de montants qui reste égal à trois pour limiter le poids de la structure de tour, les montants représentant en effet une contribution importante au poids de la structure.

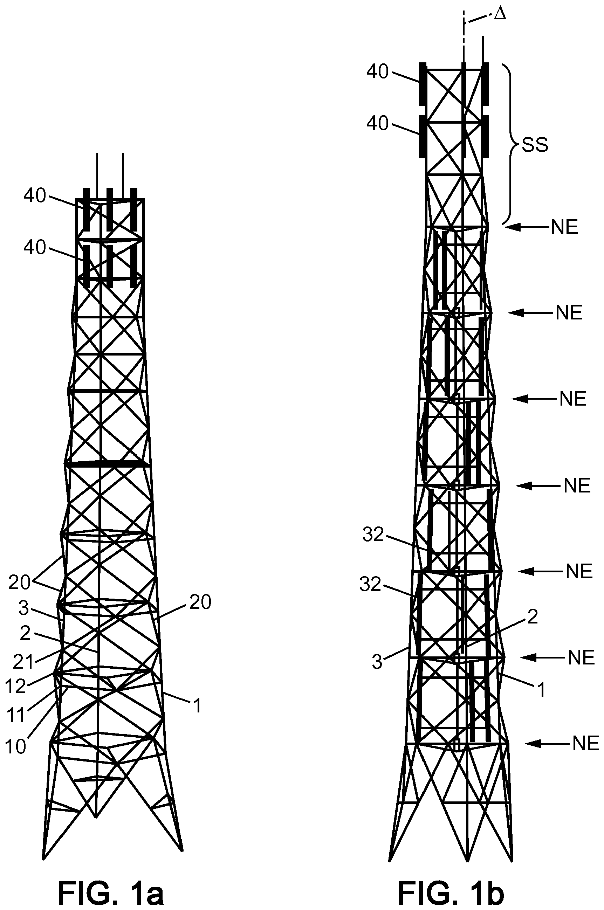

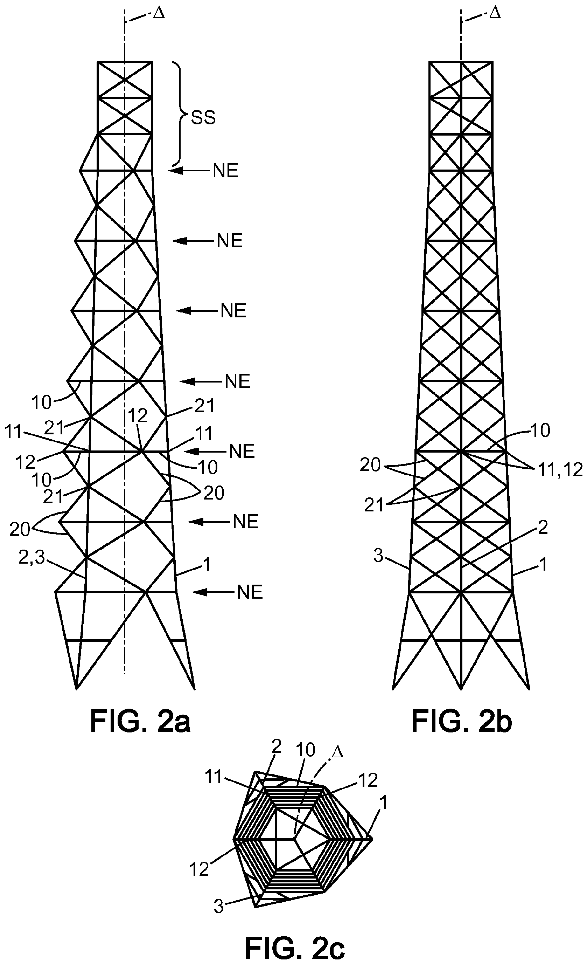

Dans le mode de réalisation qui est représenté sur les figures 1 et 2, la structure de tour comprend sept niveaux d'étages NE. Chaque segment de la structure de tour qui est compris entre deux niveaux d'étages NE successifs contient un rotor d'éolienne, de sorte que la tour représentée est conçue pour six rotors superposés. Un ou plusieurs segments de structure supplémentaires SS peuvent être prévus au dessus du niveau d'étage NE le plus haut, pour des utilisations additionnelles de la structure de tour, en plus de la fonction de support des rotors d'éolienne. Les montants 1 à 3 peuvent être parallèles à l'axe de symétrie Δ dans les segments supplémentaires SS. Par exemple, trois segments supplémentaires SS peuvent être agencés au dessus du dernier niveau d'étage NE, pour supporter des antennes de téléphonie mobile 40. Alternativement ou en combinaison, les segments supplémentaires SS peuvent être utilisés pour supporter des appareils de mesures météorologiques, des antennes d'émission radio, des antennes de communication avec des satellites en orbite, des caméras de surveillance d'incendie, des panneaux solaires ou photovoltaïques, des bras de soutien de câbles électriques, etc. Notamment, des équipements qui sont ainsi supportés par la structure de tour peuvent être alimentés en énergie électrique par le ou les éoliennes dont les rotors sont aussi supportés par la même structure de tour. Des installations peuvent être réalisées ainsi, qui sont autonomes énergétiquement et qui sont avantageuses pour des sites d'exploitation, notamment des sites isolés et/ou offshores, où la connexion à un réseau d'alimentation électrique est difficile.

Les montants 1 à 3, les segments d'étages 10, les segments de soutien 20 ainsi que les segments radiaux 30, peuvent tous être des poutres métalliques, assemblées les unes aux autres d'une des façons connues de l'Homme du métier des constructions métalliques. Toutefois, la réalisation de ces montants ou segments sous forme de tubes métalliques à section circulaire est préférée, pour réduire des turbulences qui peuvent être causées par l'écoulement du vent autour de chaque montant ou segment.

Par exemple, la différence de hauteur entre deux niveaux d'étages NE successifs peut être d'environ 5,8 m (mètre), le premier niveau d'étage NE peut être à 8 m au dessus du sol, et les segments de structure supplémentaires SS au dessus du rotor le plus haut, peuvent avoir une hauteur cumulée de 10,5 m. La structure de tour décrite, pour six rotors superposés, possède alors une hauteur totale de 51,79 m. L'écartement de chacun des montants 1 à 3 par rapport à l'axe Δ, mesuré horizontalement, peut varier par exemple entre 6,58 m au niveau du sol, 5,03 m pour le niveau d'étage NE le plus bas, et 3,04 m pour le niveau d'étage NE le plus haut.

Des mesures effectuées sur un modèle réduit à l'échelle 10/33^{ème} d'une tour telle que décrite précédemment ont montré que la perte de rendement énergétique de chaque éolienne, qui est causée par la structure de tour, est inférieure à 15%.

Une échelle d'accès pour maintenance ainsi que des câbles électriques (non représentés) peuvent être disposés le long de l'un des montants 1 à 3. Ce montant peut être sélectionné pour que les perturbations aérauliques que pourraient provoquer l'échelle et les câbles électriques soient réduites le plus possible. Par exemple, ces éléments peuvent être disposés le long de celui des montants qui est sous le vent dominant à l'endroit du site d'exploitation. En outre, certains des câbles électriques peuvent relier des stators d'éolienne en étant disposés le long de certains des segments radiaux 30 jusqu'au stator concerné.

Il est entendu que de nombreuses variantes ou modifications peuvent être introduites dans le mode de réalisation de l'invention qui vient d'être décrit en détail, tout en conservant certains au moins des avantages cités. Parmi ces variantes et modifications, les suivantes sont énumérées de façon non-limitative :
- le nombre de niveaux d'étages peut être modifié, pour adapter la structure de tour à des nombres variables de rotors d'éolienne à supporter. L'Homme du métier comprendra que la conception modulaire de la structure de tour facilite des changements du nombre des rotors ;
- lorsque la structure de tour comporte plus de trois niveaux d'étages NE, certains d'entre eux peuvent être dépourvus de rotor d'éolienne dans la tour définitive ;
- les montants peuvent avoir des formes variables dans les plans méridiens : rectilignes sur toute leur longueur ou à l'intérieur de portions de longueur, à courbure progressive, inclinés vers l'axe de symétrie Δ en direction du sommet de la tour, ou au contraire vers l'extérieur, ou avec un écartement par rapport à l'axe de symétrie Δ qui est minimal à une hauteur intermédiaire entre le niveau d'étage NE qui est le plus bas dans la tour et celui le plus haut ; etc ;
- la structure de tour peut être vrillée autour de l'axe de symétrie Δ, avec un pas angulaire d'enroulement des montants autour de l'axe Δ entre deux niveaux d'étages successifs. Une telle structure vrillée peut être adaptée pour résister à des efforts mécaniques plus importants qui seraient provoqués par la rotation des rotors ; et
- les polygones des niveaux d'étages peuvent posséder neufs côtés, constitués par autant de segments d'étages. Dans ce cas, deux segments de soutien peuvent être utilisés pour relier chaque sommet intermédiaire au montant du sommet d'arête le plus proche, vers le haut et vers le bas.

## Revendications

1. Tour comprenant :
au moins un rotor (32) d'éolienne à axe vertical ; et
une structure de tour à plusieurs niveaux d'étages (NE) superposés pour supporter ledit au moins un rotor d'éolienne à axe vertical, la structure ayant un axe de symétrie vertical (Δ) et restant identique à elle-même par des rotations de ±120° autour dudit axe de symétrie, chaque rotor étant contenu entre deux niveaux d'étages (NE) successifs de la structure, et l'axe de chaque rotor étant confondu avec l'axe de symétrie (Δ) de la structure, la structure comprenant un assemblage de segments linéaires et rigides qui inclut au moins :
- trois montants (1, 2, 3) qui s'étendent chacun entre une base et un sommet de la structure ;
- au moins deux ensembles de segments d'étage (10) ; et
- des segments de soutien (20),
dans laquelle les segments d'étage (10) d'un même ensemble sont assemblés à un niveau d'étage (NE) de la structure, pour former un polygone horizontal audit niveau d'étage, chaque segment d'étage formant un côté du polygone et
des connexions entre des extrémités respectives de deux segments d'étage successifs dans le polygone formant un sommet dudit polygone, trois des sommets de chaque polygone, dits sommets d'arêtes (11), étant connectés respectivement aux trois montants (1, 2, 3), et deux quelconques des sommets d'arêtes de chaque polygone étant séparés par au moins un autre sommet dudit polygone, dit sommet intermédiaire (12) de la paire des deux sommets d'arêtes,
dans laquelle pour chaque paire de sommets d'arêtes (11) de l'un quelconque des polygones, au moins un sommet intermédiaire (12) est en outre relié obliquement à au moins l'un des montants (1, 2, 3) auquel est connecté l'un des sommets d'arêtes de la paire, par deux segments de soutien (20) respectivement vers le haut et vers le bas de la tour,
et dans laquelle pour chaque polygone, chaque sommet intermédiaire (12) est situé à l'extérieur d'un triangle formé par les sommets d'arêtes (11) dudit polygone.

2. Tour selon la revendication 1, dans laquelle chaque montant (1, 2, 3) est parallèle à un plan méridien respectif, qui contient l'axe de symétrie (Δ) de la structure.

3. Tour selon la revendication 1 ou 2, dans laquelle chaque ensemble de segments d'étage (10) comporte six segments d'étage de longueurs identiques, de sorte que chaque polygone est un hexagone régulier,
dans laquelle pour chaque hexagone et pour chaque paire de sommets d'arêtes (11) dudit hexagone, l'unique sommet intermédiaire (12) de la paire est relié obliquement aux deux montants des sommets d'arêtes de ladite paire, par quatre segments de soutien (20), un vers le haut et un vers le bas de la tour pour chacun des deux montants,
et dans laquelle, pour chaque hexagone, les six segments de soutien (20) qui relient vers le bas les trois sommets intermédiaires (12) aux montants (1, 2, 3) ont une première longueur commune, et les six segments de soutien qui relient vers le haut lesdits trois sommets intermédiaires aux montants ont une seconde longueur commune.

4. Tour selon l'une quelconque des revendications précédentes, dans laquelle entre deux niveaux d'étages (NE) successifs dans la structure, tous les segments de soutien (20) qui relient des sommets intermédiaires (12) du plus haut ou du plus bas desdits deux niveaux d'étages successifs, sont connectés aux montants (1, 2, 3) à une même hauteur de la structure.

5. Tour selon l'une quelconque des revendications précédentes, comprenant en outre pour chaque niveau d'étage (NE), des segments radiaux (30) qui s'étendent respectivement à partir de certains au moins des sommets du polygone dudit niveau d'étage, en direction de l'axe de symétrie (Δ) de la structure, pour former un support de rotor d'éolienne.

6. Tour selon la revendication 5, dans laquelle pour au moins un des niveaux d'étages (NE) et pour certains au moins des sommets du polygone dudit niveau d'étage, deux segments radiaux (30_{A}, 30_{B}) s'étendent à partir de chacun desdits sommets du polygone respectivement en direction de deux points de convergence (A, B) situés sur l'axe de symétrie (Δ) de la structure, les deux points de convergence étant espacés le long dudit axe de symétrie et communs aux sommets du polygone dudit niveau d'étage, à partir desquels s'étendent les segments radiaux.

7. Tour selon la revendication 5 ou 6, dans laquelle les sommets de polygone à partir desquels s'étendent les segments radiaux sont des sommets intermédiaires (12).

8. Tour selon l'une quelconque des revendications précédentes, dans laquelle chaque montant (1, 2, 3) est rectiligne et se rapproche de l'axe de symétrie (Δ) de la structure en direction du haut de la tour, au moins entre le niveau d'étage le plus bas et le niveau d'étage le plus haut.

9. Tour selon l'une quelconque des revendications précédentes, dans laquelle certains au moins des montants (1, 2, 3), segments d'étages (10) et segments de soutien (20) ont chacun une limite extérieure de section qui est arrondie, sur une partie au moins d'une longueur dudit montant, segment d'étage ou segment de soutien.

10. Tour selon l'une quelconque des revendications précédentes, comprenant n+1 niveaux d'étages (NE) pour recevoir n rotors (32) d'éolienne, n étant un nombre entier égal à trois, quatre, cinq ou six.

11. Tour selon l'une quelconque des revendications précédentes, dans laquelle pour au moins un rotor (32), une trace d'extrémité radiale supérieure dudit rotor, décrite lors d'une rotation du rotor, dépasse radialement dans une projection sur un plan horizontal, le triangle (T₂) des sommets d'arêtes (11) du polygone du niveau d'étage (NE) qui est situé juste au dessus du rotor.

12. Tour selon l'une quelconque des revendications précédentes, dans laquelle pour au moins un rotor (32), une trace d'extrémité radiale inférieure dudit rotor, décrite lors d'une rotation du rotor, dépasse radialement dans une projection sur un plan horizontal, le triangle (T₁) des sommets d'arêtes (11) du polygone du niveau d'étage (NE) qui est situé juste en dessous du rotor.

13. Tour selon l'une quelconque des revendications précédentes, dans laquelle chaque rotor d'éolienne (32) comporte trois pales (33).

14. Tour selon l'une quelconque des revendications précédentes, comprenant en outre des antennes (40), notamment des antennes de téléphonie mobile, fixées sur la structure au dessus du niveau d'étage (NE) qui suit le rotor d'éolienne (32) le plus haut en direction du sommet de la tour.

## Patentansprüche

1. Turm, umfassend:
wenigstens einen Windturbinenrotor (32) mit vertikaler Achse; und
eine Turmstruktur mit mehreren übereinanderliegenden Stufenebenen (NE) zum Stützen des wenigstens einen Windturbinenrotors mit vertikaler Achse, wobei die Struktur eine vertikale Symmetrieachse (Δ) aufweist und durch Drehungen von ±120° um die Symmetrieachse mit sich selbst identisch bleibt, wobei jeder Rotor zwischen zwei aufeinanderfolgenden Stufenebenen (NE) der Struktur enthalten ist und die Achse jedes Rotors mit der Symmetrieachse (Δ) der Struktur zusammenfällt, wobei die Struktur eine Anordnung von linearen und starren Segmenten aufweist,
umfassend wenigstens:
- drei Streben (1, 2, 3), die sich jeweils zwischen einer Basis und einem Scheitelpunkt der Struktur erstrecken;
- wenigstens zwei Gruppen von Stufensegmenten (10); und
- Stützsegmente (20),
wobei die Stufensegmente (10) einer gleichen Gruppe auf einer Stufenebene (NE) der Struktur zusammengesetzt sind, um ein horizontales Polygon auf der Stufenebene zu bilden, wobei jedes Stufensegment eine Seite des Polygons bildet und Verbindungen zwischen jeweiligen Enden von zwei aufeinanderfolgenden Stufensegmenten in dem Polygon einen Scheitelpunkt des Polygons bilden, wobei drei der Scheitelpunkte jedes Polygons, die als Kantenscheitelpunkte (11) bezeichnet werden, jeweils mit den drei Streben (1, 2, 3) verbunden sind und jeweils zwei der Kantenscheitelpunkte jedes Polygons durch wenigstens einen anderen als Zwischenscheitelpunkt (12) des Paars der beiden Kantenscheitelpunkte bezeichneten Scheitelpunkt des Polygons getrennt sind,
wobei für jedes Paar von Kantenscheitelpunkten (11) eines der Polygone wenigstens ein Zwischenscheitelpunkt (12) ferner schräg mit wenigstens einer der Streben (1, 2, 3) verbunden ist, mit welcher einer der Kantenscheitelpunkte des Paares durch zwei Stützsegmente (20) jeweils in Richtung der Oberseite und der Unterseite des Turms verbunden ist, und wobei bei jedem Polygon jeder Zwischenscheitelpunkt (12) außerhalb eines durch die Kantenscheitelpunkte (11) des Polygons gebildeten Dreiecks liegt.

2. Turm nach Anspruch 1, wobei jede Strebe (1, 2, 3) parallel zu einer jeweiligen Meridianebene ist, welche die Symmetrieachse (Δ) der Struktur umfasst.

3. Turm nach Anspruch 1 oder 2, wobei jede Gruppe von Stufensegmenten (10) sechs Stufensegmente mit identischer Länge umfasst, so dass jedes Polygon ein regelmäßiges Sechseck ist, wobei bei jedem Sechseck und bei jedem Paar von Kantenscheitelpunkten (11) des Sechsecks der einzelne Zwischenscheitelpunkt (12) des Paars durch vier Stützsegmente (20) schräg mit den beiden Streben der Kantenscheitelpunkte des Paars verbunden ist, eines zur Oberseite und eines zur Unterseite des Turms für jede der beiden Streben,
und wobei bei jedem Sechseck die sechs Stützsegmente (20), die die drei Zwischenscheitelpunkte (12) nach unten hin mit den Streben (1, 2, 3) verbinden, eine erste gemeinsame Länge haben und die sechs Stützsegmente, die die drei Zwischenscheitel nach oben hin mit den Streben verbinden, eine zweite gemeinsame Länge haben.

4. Turm nach einem der vorhergehenden Ansprüche, wobei zwischen zwei aufeinanderfolgenden Stufenebenen (NE) in der Struktur alle Stützsegmente (20), die die Zwischenscheitelpunkte (12) der höchsten oder niedrigsten der beiden aufeinanderfolgenden Stufenebenen verbinden, mit den Streben (1, 2, 3) auf derselben Höhe der Struktur verbunden sind.

5. Turm nach einem der vorhergehenden Ansprüche, welcher ferner für jede Stufenebene (NE) radiale Segmente (30) aufweist, die sich jeweils von wenigstens einigen der Scheitelpunkte des Polygons der Stufenebene in Richtung der Symmetrieachse (Δ) der Struktur erstrecken, um eine Stütze für einen Windturbinenrotor zu bilden.

6. Turm nach Anspruch 5, wobei sich bei wenigstens einer der Stufenebenen (NE) und bei wenigstens einigen der Scheitelpunkte des Polygons der Stufenebene zwei radiale Segmente (30_{A}, 30_{B}) von jedem der Scheitelpunkte des Polygons jeweils zu zwei Konvergenzpunkten (A, B) erstrecken, die auf der Symmetrieachse (Δ) der Struktur liegen, wobei die beiden Konvergenzpunkte entlang der Symmetrieachse beabstandet sind und den Scheitelpunkten des Polygons der Stufenebene gemeinsam sind, von denen sich die radialen Segmente erstrecken.

7. Turm nach Anspruch 5 oder 6, wobei die Scheitelpunkte des Polygons, von denen sich die radialen Segmente erstrecken, Zwischenscheitelpunkte (12) sind.

8. Turm nach einem der vorhergehenden Ansprüche, wobei jede Strebe (1, 2, 3) geradlinig ist und sich der Symmetrieachse (Δ) der Struktur zur Oberseite des Turms hin nähert, wenigstens zwischen der untersten und der höchsten Stufenebene.

9. Turm nach einem der vorhergehenden Ansprüche, wobei wenigstens einige der Streben (1, 2, 3), Stufensegmente (10) und Stützsegmente (20) jeweils eine äußere Querschnittsbegrenzung aufweisen, die über wenigstens einen Teil einer Länge der Strebe, des Stufensegments oder Stützsegments abgerundet ist.

10. Turm nach einem der vorhergehenden Ansprüche, umfassend n+1 Stufenebenen (NE) zur Aufnahme von n Windturbinenrotoren (32), wobei n eine ganze Zahl gleich drei, vier, fünf oder sechs ist.

11. Turm nach einem der vorhergehenden Ansprüche, wobei bei wenigstens einem Rotor (32) eine obere radiale Endspur des Rotors, die während einer Drehung des Rotors beschrieben wird, in einer Projektion auf eine horizontale Ebene über das Dreieck (T₂) der Kantenscheitelpunkte (11) des Polygons der Stufenebene (NE), die sich unmittelbar über dem Rotor befindet, radial vorsteht.

12. Turm nach einem der vorhergehenden Ansprüche, wobei bei wenigstens einem Rotor (32) eine untere radiale Endspur des Rotors, die während einer Drehung des Rotors beschrieben wird, in einer Projektion auf eine horizontale Ebene über das Dreieck (T₁) der Kantenscheitelpunkte (11) des Polygons der Stufenebenen (NE) die sich unmittelbar unter dem Rotor befindet, radial vorsteht.

13. Turm nach einem der vorhergehenden Ansprüche, wobei jeder Windturbinenrotor (32) drei Blätter (33) umfasst.

14. Turm nach einem der vorhergehenden Ansprüche, welcher ferner Antennen (40), einschließlich Mobilfunkantennen, umfasst, die an der Struktur oberhalb der Stufenebene (NE) befestigt sind, welche dem höchsten Windturbinenrotor (32) in Richtung der Spitze des Turms folgt.

## Claims

1. A tower comprising:
at least one vertical-axis wind turbine rotor (32); and
a tower structure with a plurality of superimposed stage levels (NE) for supporting said at least one vertical-axis wind turbine rotor, the structure having a vertical axis of symmetry (Δ) and remaining identical to itself in rotations of ±120° about said axis of symmetry, each rotor being contained between two successive stage levels (NE) of the structure, and the axis of each rotor being coincident with the axis of symmetry (Δ) of the structure, the structure comprising an assembly of linear and rigid segments which includes at least:
- three uprights (1, 2, 3) each extending between a base and a top of the structure;
- at least two sets of stage segments (10); and
- support segments (20),
wherein the stage segments (10) of one and same set are assembled at a stage level (NE) of the structure, to form a horizontal polygon at said stage level, each stage segment forming one side of the polygon and connections between respective ends of two successive stage segments in the polygon forming a vertex of said polygon, three of the vertices of each polygon, referred to as edge vertices (11), being respectively connected to the three uprights (1, 2, 3), and any two of the edge vertices of each polygon being separated by at least one other vertex of said polygon, referred to as the intermediate vertex (12) of the pair of two edge vertices,
wherein, for each pair of edge vertices (11) of any one of the polygons, at least one intermediate vertex (12) is further connected obliquely to at least one of the uprights (1, 2, 3) to which one of the edge vertices of the pair is connected, by two support segments (20) respectively towards the top and towards the bottom of the tower,
and wherein, for each polygon, each intermediate vertex (12) is located outside a triangle formed by the edge vertices (11) of said polygon.

2. The tower according to claim 1, wherein each upright (1, 2, 3) is parallel to a respective meridian plane which contains the axis of symmetry (Δ) of the structure.

3. The tower according to claim 1 or 2, wherein each set of stage segments (10) comprises six stage segments of identical lengths, such that each polygon is a regular hexagon,
wherein, for each hexagon and for each pair of edge vertices (11) of said hexagon, the single intermediate vertex (12) of the pair is connected obliquely to the two uprights of the edge vertices of said pair by four support segments (20), one towards the top and one towards the bottom of the tower for each of the two uprights,
and wherein, for each hexagon, the six support segments (20) connecting the three intermediate vertices (12) to the uprights (1, 2, 3) towards the bottom have a first common length, and the six support segments connecting said three intermediate vertices to the uprights towards the top have a second common length.

4. The tower according to any one of the preceding claims, wherein, between two successive stage levels (NE) in the structure, all support segments (20) connecting intermediate vertices (12) of the highest or of the lowest of said two successive stage levels are connected to the uprights (1, 2, 3) at one and same height of the structure.

5. The tower according to any one of the preceding claims, further comprising, for each stage level (NE), radial segments (30) which extend respectively from at least some of the vertices of the polygon of said stage level, in direction of the axis of symmetry (Δ) of the structure, to form a wind turbine rotor support.

6. The tower according to claim 5, wherein, for at least one of the stage levels (NE) and for at least some of the vertices of the polygon of said stage level, two radial segments (30_{A}, 30_{B}) extend from each of said vertices of the polygon, respectively towards two points of convergence (A, B) which are located on the axis of symmetry (Δ) of the structure, the two points of convergence being spaced apart along said axis of symmetry and being common to the vertices of the polygon of said stage level, from which the radial segments extend.

7. The tower according to claim 5 or 6, wherein the polygon vertices from which the radial segments (30) extend are intermediate vertices (12).

8. The tower according to any one of the preceding claims, wherein each upright (1, 2, 3) is rectilinear and approaches the axis of symmetry (Δ) of the structure in the upward direction towards the top of the tower, at least between the lowest stage level and the highest stage level.

9. The tower according to any one of the preceding claims, wherein at least some of the uprights (1, 2, 3), stage segments (10), and support segments (20) each have a rounded outer boundary of cross-section along at least a portion of a length of said upright, stage segment, or support segment.

10. The tower according to any one of the preceding claims, comprising n+1 stage levels (NE) for receiving n wind turbine rotors (32), n being an integer equal to three, four, five, or six.

11. The tower according to any one of the preceding claims, wherein, for at least one rotor (32), a path traced by an upper radial end of said rotor during one rotation of the rotor extends radially beyond, in a projection onto a horizontal plane, the triangle (T₂) of the edge vertices (11) of the polygon of the stage level (NE) which is located just above the rotor.

12. The tower according to any one of the preceding claims, wherein, for at least one rotor (32), a path traced by a lower radial end of said rotor during one rotation of the rotor extends radially beyond, in a projection onto a horizontal plane, the triangle (T₁) of the edge vertices (11) of the polygon of the stage level (NE) which is located just below the rotor.

13. The tower according to any one of the preceding claims, wherein each wind turbine rotor (32) comprises three blades (33).

14. The tower according to any one of the preceding claims, further comprising antennas (40), in particular cellular telephone antennas, fixed to the structure above the stage level (NE) that comes after the highest wind turbine rotor (32) in the upward direction of the tower.
